19 Europäisches Patentamt

European Patent Office

Office européen des brevets

11 Veröffentlichungsnummer: **0 507 175 A2**

# 12 EUROPÄISCHE PATENTANMELDUNG

21 Anmeldenummer: **92104975.5**

22 Anmeldetag: **23.03.92**

51 Int. Cl.5: **C08G 18/70**, C08G 18/63

30 Priorität: **05.04.91 DE 4110976**

43 Veröffentlichungstag der Anmeldung:
**07.10.92 Patentblatt 92/41**

84 Benannte Vertragsstaaten:
**AT BE DE FR GB IT NL**

71 Anmelder: **BAYER AG**

**W-5090 Leverkusen 1 Bayerwerk(DE)**

72 Erfinder: **Müller, Hanns Peter, Dr.**
**Hollweg 20**
**W-5068 Odenthal(DE)**
Erfinder: **Avar, Geza, Dr.**
**Hermann-von-Helmholtz-Strasse 26**
**W-5090 Leverkusen 1(DE)**
Erfinder: **Weber, Christian, Dr.**
**Paul-Klee-Strasse 68a**
**W-5090 Leverkusen 1(DE)**
Erfinder: **Dörner, Karl-Heinz, Dipl.-Ing.**
**Weilersgrund 26**
**W-5024 Pulheim(DE)**
Erfinder: **Karbach, Alexander, Dr.**
**Scheiblerstrasse 81**
**W-4150 Krefeld(DE)**
Erfinder: **Lindner, Christian, Dr.**
**Im Wasserblech 11**
**W-5000 Köln 80(DE)**
Erfinder: **Dhein, Rolf, Dr.**
**Deswatinesstrasse 30**
**W-4150 Krefeld(DE)**

54 Modifizierte Polyisocyanate, ein Verfahren zu ihrer Herstellung und ihre Verwendung.

57 Modifizierte Polyisocyanate mit einem NCO-Gehalt von 10 bis 45 Gew.-%, bestehend im wesentlichen aus a) einer Polyisocyanatkomponente, bestehend im wesentlichen aus einem organischen, bei Raumtemperatur flüssigen Polyisocyanat mit einem NCO-Gehalt von 15 bis 50 Gew.-%, b) 2 bis 100 Gew.-%, bezogen auf das Gewicht der Komponente a) eines Polymermodifikators, bestehend aus mindestens einem in der Komponente a) aufgequollen dispergiert vorliegenden Pfropfkautschuk, sowie gegebenenfalls c) den üblichen Hilfs- und Zusatzstoffen der Polyurethanchemie, ein Verfahren zur Herstellung derartiger modifizierter Polyisocyanate durch Vermischen der Komponenten a) und b), gegebenenfalls unter der Einwirkung von Scherkräften und erhöhten Temperaturen, wobei die Komponente b) in der Komponente a) unter Aufquellen dispergiert wird, wobei die gegebenenfalls eingesetzten Hilfs- und Zusatzstoffe c) den Ausgangskomponenten a) und/oder b) und/oder dem Gemisch während und/oder nach dem Dispergierschritt zugemischt werden, sowie die Verwendung der modifizierten Polyisocyanate als Polyisocyanatkomponente bei der Herstellung von Kunststoffen nach dem Isocyanat-Polyadditionsverfahren.

Rank Xerox (UK) Business Services

Die Erfindung betrifft neue, modifizierte Polyisocyanate, ein Verfahren zu ihrer Herstellung und ihre Verwendung als Polyisocyanatkomponente bei der Herstellung von Kunststoffen nach dem Isocyanat-Polyadditionsverfahren, insbesondere bei der Herstellung von Polyurethankunststoffen.

Die Modifizierung von Polyisocyanaten hatte als Zwischenstufe für die Polyurethan-Herstellung in jüngster Zeit eine immer stärkere Bedeutung erlangt, weil auf diese Weise das Qualitätsniveau und die Eigenschaften der Endprodukte gezielt beeinflußt werden können (vergl. z.B. "Polyurethane", Kunststoff-Handbuch 7, Carl Hanser Verlag, München-Wien (1983) S. 78 ff.).

Jetzt wurde ein einfach durchführbares Verfahren zur Herstellung von modifizierten Polyisocyanaten gefunden, die die Herstellung von Isocyanat-Polyadditionsprodukten, insbesondere Polyurethan-Kunststoffen, gestatten, die sich durch hohe Steifigkeit, Chemikalienresistenz, Wärmebeständigkeit und verbesserte Zähigkeit bei gleichbleibend guter Dimensionsstabilität auszeichnen. Es muß als ausgesprochen überraschend angesehen werden, daß die erfindungsgemäß einzusetzenden, nachstehend näher beschriebenen Polymermodifikatoren derartige Verbesserungen in den Endprodukten bewirken, da dem Fachmann bekannt ist, daß für die Qualität von Polyurethankunststoffen die gute Ausbildung von Hart- und Weichsegmenten verantwortlich ist. Diese wird überraschenderweise durch die Anwesenheit der Polymermodifikatoren nicht gestört.

Gegenstand der Erfindung sind modifizierte Polyisocyanate mit einem NCO-Gehalt von 10 bis 45 Gew.-%, bestehend im wesentlichen aus

a) einer Polyisocyanatkomponente, bestehend im wesentlichen aus einem organischen, bei Raumtemperatur flüssigen Polyisocyanat mit einem NCO-Gehalt von 15 bis 50 Gew.-%,

b) 2 bis 100 Gew.-%, bezogen auf das Gewicht der Komponente a), eines Polymermodifikators, bestehend aus mindestens einem in der Komponente a) aufgequollen dispergiert vorliegenden Pfropfkautschuk einer teilchenförmigen Struktur, welcher zu 20 bis 80 Gew.-% aus einem Kautschukpolymerisat einer unter 0°C liegenden Glasübergangstemperatur, und zum Rest aus aufgepfropften Vinylmonomeren besteht, sowie gegebenenfalls

c) den üblichen Hilfs- und Zusatzstoffen der Polyurethanchemie.

Gegenstand der Erfindung ist auch ein Verfahren zur Herstellung dieser modifizierten Polyisocyanate, welches dadurch gekennzeichnet ist, daß man

a) eine Polyisocyanatkomponente, bestehend aus mindestens einem organischen, bei Raumtemperatur flüssigen Polyisocyanat mit einem NCO-Gehalt von 15 bis 50 Gew.-%

mit

b) 2 bis 100 Gew.-%, bezogen auf das Gewicht der Komponente a), eines Polymermodifikators, bestehend aus mindestens einem Pfropfkautschuk einer teilchenförmigen Struktur, welcher zu 20 bis 80 Gew.-% aus einem Kautschukpolymerisat einer unter 0°C liegenden Glasübergangstemperatur, und zum Rest aus aufgepfropften Vinylmonomeren besteht,

vermischt und gegebenenfalls unter der Einwirkung von Scherkräften und erhöhten Temperaturen unter Aufquellen der Komponente b) diese in der Komponente a) dispergiert, wobei die gegebenenfalls ebenfalls eingesetzten Hilfs- und Zusatzstoffe c) den Ausgangskomponenten a) und/oder b) und/oder dem Gemisch während und/oder nach dem Dispergierschritt zugemischt werden.

Gegenstand der Erfindung ist schließlich auch die Verwendung der neuen modifizierten Polyisocyanate als Polyisocyanatkomponente bei der Herstellung von Kunststoffen nach dem Isocyanat-Polyadditionsverfahren, insbesondere bei der Herstellung von Polyurethankunststoffen.

Ausgangsmaterialien a) sind bei Raumtemperatur flüssige organische Polyisocyanate mit einem NCO-Gehalt von 15 bis 50, vorzugsweise 22 bis 34 Gew.-%. Oftmals werden als Komponente a) Polyisocyanatgemische eingesetzt, die einen mittleren NCO-Gehalt von 15 bis 50, vorzugsweise 22 bis 34 Gew.-% aufweisen. Das (mittlere) Molekulargewicht der Polyisocyanate liegt im allgemeinen bei 168 bis 1.000, vorzugsweise bei 168 bis 300.

Beispiele geeigneter Polyisocyanate sind Hexamethylendiisocyanat, Isophorondiisocyanat, trans-trans-Cyclohexyldiisocyanat, die isomeren Xylylendiisocyanate, 4,4'-Diisocyanato-dicyclohexylmethan, 2,4- und/oder 2,6-Diisocyanatotoluol, 4,4'-Diisocyanatodiphenylmethan und gegebenenfalls geringen Mengen 2,2'-Diisocyanatodiphenylmethan und/oder mit seinen höheren Homologen. Derartige Gemische entstehen bekanntlich bei der an sich bekannten Phosgenierung von Anilin-Formaldehyd-Kondensaten. Ferner in Betracht kommen Urethan- und/oder Carbodiimmid- und/oder Uretdion- und/oder Isocyanurat- und/oder Biuret-modifizierte Derivate dieser Polyisocyanate. Vorzugsweise handelt es sich bei der Polyisocyanatkomponente a) um mindestens ein aromatisches Polyisocyanat. Besonders gut geeignet sind bei Raumtemperatur flüssige Polyisocyanate oder Polyisocyanatgemische der Diphenylmethanreihe oder bei Raumtemperatur flüssige Derivate dieser Polyisocyanate bzw. Polyisocyanatgemische. Die Polyisocyanatkomponente a) weist im allgemeinen einen NCO-Gehalt von 15 bis 50 Gew.-%, vorzugsweise von 22 bis 34 Gew.-% auf.

Bei der Komponente b) der erfindungsgemäßen Systeme handelt es sich um bekannte Pfropfkautschuke, die aus einem Kautschukpolymerisat mit Glasübergangstemperaturen unter 0°C, vorzugsweise unter -50°C und auf den Kautschuk wenigstens partiell aufgepfroptem Polymerisat aus wenigstens einem Vinylmonomerpolymerisat bestehen. Die als Polymermodifikatoren b) geeigneten Pfropfkautschuke weisen vorzugsweise eine teilchenförmige Struktur mit mittleren Teilchendurchmessern ($d_{50}$-Wert) von 0,1 bis 0,8 μm auf und kommen in Form entsprechender "Pulver" oder auch "grobteilig", d.h. in Form von Agglomeraten derartiger Teilchen zum Einstz. Die Pfropfkautschuke bestehen zu 20 bis 80, vorzugsweise 30 bis 70 Gew.-% aus einem Kautschuk der genannten Glasübergangstemperatur und zum Rest aus aufgepfropften Vinylmonomeren.

Als Kautschuke zur Herstellung der Pfropfkautschuke sind beispielsweise folgende geeignet: Dienmonomerkautschuke auf der Basis von Butadien, Isopren, Chloropren, gegebenenfalls in Mischung mit bis zu 35 Gew.-% anderer Monomerer wie Styrol, Acrylnitril oder Alkyl(meth)acrylat, Olefinkautschuke auf der Basis von Ethylen, Propylen, Isobutylen, Vinylacetat, Kohlenmonoxid, Alkylacrylat und geringen Mengen Dienmonomer oder Alkylacrylatkautschuke auf der Basis von Alkylacrylatmonomeren (insbesondere $C_1$-$C_7$-Alkylacrylat) gegebenenfalls in Mischung mit bis 10 Gew.-% anderer Vinyl- oder Alkylmonomeren. Besonders bevorzugte Pfropfkautschuke b) werden durch radikalische Pfropfung von Vinylmonomeren auf ein Kautschukpolymerisat, das wenigstens teilweise vernetzt vorliegt, erzeugt. Der eingesetzte Kautschuk hat vorzugsweise einen Gelgehalt von mindestens 30 Gew.-%.

Als aufzupfropfende Vinylmonomere eignen sich z.B. Monomere, ausgewählt aus der Gruppe, bestehend aus Styrol, p-Methylstyrol, α-Methylstyrol, Acrylnitril, Methacrylnitril, (1-6-Alkyl(meth)-acrylat, Vinylacetat, Vinylether, Maleinsäureanhydrid, Maleinsäureimiden, (Meth)-Acrylamiden und Gemischen derartiger Monomerer. Besonders geeignet sind Styrol-Acrylnitril-Kombinationen oder Methylmethacrylat-haltige Kombinationen als Pfropfmonomere.

Die Herstellung der als Komponente b) geeigneten Pfropfpolymeren erfolgt vorzugsweise mittels der bekannten radikalischen Emulsionspfropfpolymerisation.

Die Pfropfreaktion, die Emulsionspolymerisation und die Massepolymerisation sind in Ullmann Enzyclopädie, 4. Auflage, Band 19, Seiten 277-295, ausführlich beschrieben. Pfropfprodukte im Sinne der vorliegenden Erfindung sind Polymerisate, die durch Polymerisation von Vinylmonomeren in Gegenwart eines Kautschuks erzeugt werden. Bei dieser sogenannten Pfropfreaktion bilden sich echte Pfropfprodukte und nicht gepfropfte Anteile des Vinylmonomerpolymerisates. Im Rahmen der Erfindung sind unter "Pfropfkautschuk" vor allem Gemische dieser beiden Komponenten zu verstehen.

Bei den gegebenenfalls in den erfindungsgemäßen modifizierten Polyisocyanaten vorliegenden Hilfs- und Zusatzstoffen der Polyurethanchemie c) handelt es sich um solche der im oben genannten Kunststoff-Handbuch auf Seiten 92 bis 111 beispielhaft beschriebenen Art. Die Hilfs- und Zusatzstoffe c) sind allerdings auf solche beschränkt, die in den erfindungsgemäßen Systemen lagerstabil formulierbar sind, z.B. Inhibitoren, Vernetzer, Kettenverlängerern in untergeordneten Mengen, Tenside, Zusatzstoffe für die Flammschutzausrüstung, physikalische Treibmittel, Füllstoffe, Alterungsschutzmittel, Trennmittel, Biocide, Zusatzmittel, Farbstoffe, Weichmacher, Haftvermittler, Antistatika und Entwässerungsmittel, z.B. Tosylisocyanat in geringen Mengen.

Zur Durchführung des erfindungsgemäßen Verfahrens werden vorzugsweise die organischen Polyisocyanate a) vorgelegt und die Polymermodifikatoren b) unter Rühren in die vorgelegte Komponente a) eingetragen, wobei die Menge der Komponente b) vorzugsweise 5 bis 50 Gew.-%, bezogen auf das Gewicht der Komponente a), beträgt. Vorzugsweise wird die Mischung auf erhöhte Temperaturen bis 120°C, vorzugsweise 80 bis 120°C, aufgeheizt. Es ist jedoch auch möglich, die Polymermodifikatoren b) bei Raumtemperatur mit der Polyisocyanatkomponente a) zu vermischen, beispielsweise indem man die Komponente b) in "grobe" Form vorlegt und mit der Komponente a) überschichtet und anschließend die Mischung bei Raumtemperatur unter Ausschluß von Luftfeuchtigkeit und vorzugsweise unter Inertgas (z.B. Stickstoff) oder unter Vakuum zu rühren.

In beiden Fällen bilden sich erfindungsgemäße modifizierte Polyisocyanate, in denen die Polymermodifikatoren b) angequollen dispergiert vorliegen. Der Quellgrad der in der Komponente a) dispergiert vorliegenden Polymermodifikatoren b) liegt im allgemeinen bei 2 bis 6. Die Bestimmung des Quellgrades dient zur Charakterisierung der Wechselwirkung von Polymeren mit Quellungsmitteln. Die Bestimmungsmethoden sind in Hoffmann, Martin Polymeranalytik I und II (1977) ISBN 3-13-519701-8, ISBN 3-13-519801-4, beschrieben.

Die erfindungsgemäßen modifizierten Polyisocyanate stellen wertvolle Ausgangsmaterialien zur Herstellung von Kunststoffen nach dem Isocyanat-Polyadditionsverfahren dar. Insbesondere eignen sie sich für die Herstellung von Polyurethankunststoffen. Sie eignen sich zur Herstellung von thermoplastischen Polyurethanelastome ren, zur Herstellung von Gießelastomeren, Hartformstoffen, Weichformstoffen und auch zur Herstellung von Formschaumstoffen mit integraler Dichteverteilung. Gut geeignet sind die erfindungsgemäßen modifizierten Polyisocyanate insbesondere auch als Polyisocyanatkomponente bei der Herstellung von elastomeren Polyurethan-Formteilen des Dichtebereichs 0,8 bis 1,4 g/10³ nach dem Prinzip der Reaktionsspritzgußtechnik. Die erfindungsgemäßen, modifizierten Polyisocyanate können bei ihrer erfindungsgemäßen Verwendung anstelle der üblicherweise eingesetzten organischen Polyisocyanate mit allen beliebigen Reaktionspartnern mit gegenüber Isocyanatgruppen reaktionsfähigen Wasserstoffen kombiniert werden. Selbstverständlich ist auch die Mitverwendung der üblichen Hilfs- und Zusatzstoffe in derartigen, zu Polyurethanen ausreagierenden Reaktionsgemischen möglich. Bezüglich diesbezüglicher Einzelheiten sei erneut auf das bereits oben zitierte Kunststoff-Handbuch verwiesen.

In den nachfolgenden Beispielen beziehen sich alle Mengenangaben in Prozent auf Gew.-%.

## Beispiele

### Polymermodifikator b[1])

Handelsübliches Pfropfpolymerisat, bestehend aus 30 Gew.-% eines Polybutadienkautschuks einer Glasumwandlungstemperatur von -80°C und 70 Gew.-% eines Styrol-Acrylnitril-Copolymerisats (Styrol/Acrylnitril-Gewichtsverhältnis = 72:28) einer mittleren Teilchengröße von 0,4 $\mu$m ($d_{50}$-Wert). Das Pfropfpolymerisat wurde durch Copolymerisation von Styrol und Acrylnitril in Gegenwart einer wäßrigen Emulsion des Polybutadien-Kautschuks hergestellt.

### Polymermodifikator b[2])

Handelsübliches Pfropfpolymerisat, bestehend aus 55 Gew.-Teilen eines Polybutadienkautschuks mit einer Glasumwandlungstemperatur von -80°C und 45 Gew.-% Styrol-Acrylnitril-Copolymerisats der oben unter b[1]) genannten Zusammensetzung. Die Herstellung des Pfropfpolymerisats erfolgte in Analogie zur Herstellung des obengenannten Pfropfpolymerisats. Es besitzt eine mittlere Teilchengröße von 0,4 $\mu$m ($d_{50}$-Wert). Es wird als "grobes Pulver", d.h. in Form eines Agglomerats von feinen Teilchen der genannten Teilchengröße eingesetzt.

### Beispiel 1

60 g Polymermodifikator b[2]) werden mit 240 g Toluylendiisocyanat (TDI = 2,4- und 2,6-Isomere im Gewichtsverhältnis 80:20) überschichtet und im Rundkolben unter Ausschluß von Luftfeuchtigkeit unter N₂ 10 Stunden bei Raumtemperatur gerührt. Anschließend wird ein Vakuum angelegt (20 Torr), das modifizierte Diisocyanat entgast und über einen Filter abgefüllt. Es entsteht auf diese Weise eine milchige-viscose Flüssigkeit mit folgenden Kenndaten:

| | |
|---|---|
| NCO-Gehalt; | 38,4 % |
| Viskosität (25°C): | 3100 mPa.s |
| Pfropfpolymerisatgehalt; | 20 %, bezogen auf TDI |

Die separat durchgeführte Quellgradbestimmung ergab einen Quellungsgrad von 2,64.

### Beispiel 2

30 g Polymermodifikator b[2]) werden mit 270 g TDI (NCO-Gehalt: 48,3 %) überschichtet und wie im Beispiel 1 beschrieben weiterbehandelt. Es entsteht auf diese Weise eine milchig-viskose Flüssigkeit mit folgenden Kenndaten:

| | |
|---|---|
| NCO-Gehalt: | 43,3 % |
| Viskosität (25°C): | 65 mPa.s |
| Pfropfpolymerisatgehalt: | 10 %, bezogen auf TDI |

### Beispiel 3

11,5 g Polymermodifikator b[2]) werden mit 218 g eines mit Tripropylenglykol modifizierten 4,4'-Diphenylmethandiisocyanat (NCO-Gehalt: 23 %) überschichtet und wie im Beispiel 1 beschrieben weiterbehandelt. Es entsteht eine milchig-viskose Flüssigkeit mit folgenden Kenndaten:

| NCO-Gehalt: | 21,8 % |
|---|---|
| Viskosität (25°C): | 2500 mPa.s |
| Pfropfpolymerisatgehalt: | 5 %, bezogen auf Ausgangsdiisocyanat |

Die separat durchgeführte Quellungsgradbestimmung ergab einen Quellungsgrad von 3,01.

Beispiel 4

Man verfährt wie im Beispiel 3 beschrieben nur mit dem Unterschied, daß 11,5 g Polymermodifikator b[2]) mit 218 g eines durch Reaktion mit einer unterschüssigen Menge an Tripropylenglykol urethanisierten Polyisocyanatgemischs der Diphenylmethanreihe mit einem NCO-Gehalt von 24,5 % und einer Viskosität bei 25°C von 510 mPa.s überschichtet werden. Es entsteht eine milchig-viskose Flüssigkeit mit folgenden Kenndaten:

| NCO-Gehalt: | 23,3 % |
|---|---|
| Viskosität (25°C): | 1900 mPa.s |
| Pfropfpolymerisatgehalt: | 5 %, bezogen auf Ausgangsdiisocyanat |

Beispiel 5

60 g Polymermodifikator b[2]) mit 240 g Isophorondiisocyanat (IPDI, NCO-Gehalt: 37,9 %) überschichtet und wie im Beispiel 1 beschrieben weiterbehandelt. Es entsteht eine milchig-viskose Flüssigkeit mit folgenden Kenndaten:

| NCO-Gehalt: | 30,1 % |
|---|---|
| Viskosität (25°C): | 1700 mPa.s |
| Pfropfpolymerisatgehalt: | 20 %, bezogen auf IPDI |

Die separat durchgeführte Quellgradbestimmung ergab einen Quellungsgrad von 2,59.

Beispiel 6

30 g Polymermodifikator b[2]) werden mit 270 g eines durch Carbodimidisierung eines Teils der Isocyanatgruppen modifizierten 4,4'-Diisocyanatediphenylmethan mit einem NCO-Gehalt von 29 % überschichtet und wie im Beispiel 1 beschrieben weiterbehandelt. Es entsteht eine milchig-viskose Flüssigkeit mit folgenden Kenndaten:

| NCO-Gehalt: | 25,9 % |
|---|---|
| Viskosität (25°C): | 1500 mPa.s |
| Pfropfpolymerisatgehalt: | 10 %, bezogen auf Ausgangspolyisocyanate |

Die separat durchgeführte Quellgradbestimmung ergab einen Quellungsgrad von 2,41.

Beispiel 7

11,5 g Polymermodifikator b[2]) werden mit 218 g TDI (NCO-Gehalt: 48,3 %) überschichtet und wie im Beispiel 1 beschrieben weiterbehandelt. Es entsteht eine milchig-viskose Flüssigkeit mit folgenden Kenndaten:

| NCO-Gehalt: | 45,7 % |
|---|---|
| Viskosität (25°C): | 13 mPa.s |
| Pfropfpolymerisatgehalt: | 5 %, bezogen auf TDI |

Beispiel 8

60 g Polymermodifikator b2) werden mit 240 g 4,4'-Diisocyanato-dicyclohexylmethan (NCO-Gehalt: 31,8 %) überschichtet und wie in Beispiel 1 beschrieben weiterbehandelt. Es entsteht eine milchig-viskose Flüssigkeit mit folgenden Kenndaten:

| NCO-Gehalt: | 25,4 % |
|---|---|
| Viskosität (25°C): | 40000 mPa.s |
| Pfropfpolymerisatgehalt: | 20 %, bezogen auf Ausgangspolyisocyanat |

Die separat durchgeführte Quellgradbestimmung ergab einen Quellungsgrad von 5,93.

Beispiel 9

60 g Polymermodifikator b1) werden mit 240 g TDI (NCO-Gehalt: 48,3 %) überschichtet und wie in Beispiel 1 beschrieben weiterbehandelt. Es entsteht auf diese Weise eine milchig-viskose Flüssigkeit mit folgenden Kenndaten:

| NCO-Gehalt: | 37,6 % |
|---|---|
| Viskosität (25°C): | 7700 mPa.s |
| Pfropfpolymerisatgehalt: | 20 %, bezogen auf TDI |

Beispiel 10

3.200 g eines technischen Polyisocyanatgemischs der Diphenylmethanreihe mit einem NCO-Gehalt von 31,2 % und einer Viskosität bei 25°C von 35 mPa.s mit einem Gehalt an Diisocyanatodiphenylmethan-Isomeren von 90 % und einem Gehalt an höheren Homologen von 10 % werden portionsweise bei Raumtemperatur unter Rühren und Stickstoff mit 800 g des Polymermodifikators b2) versetzt. Die entstandene grobteilige Dispersion wird auf 90°C aufgeheizt und 3 Stunden bei 90°C und 20 mbar zur Quellung gerührt. Dabei entsteht eine sehr feinteilige, sedimentationsstabile Dispersion. Nach Abkühlen besitzt das modifizierte Polyisocyanatgemisch folgende Kenndaten:

| Viskosität (25°C): | 3.160 mPa.s |
|---|---|
| NCO-Gehalt: | 25,1 % |
| Pfropfpolymerisatgehalt: | 20 %, bezogen auf Ausgangspolyisocyanat |

Beispiel 11 (erfindungsgemäße Verwendung)

253 g des modifizierten Polyisocyanats gemäß Beispiel 10 werden in einem Reaktionskolben vorgelegt und mit 236,5 g einer Polyetherpolyolmischung vermischt. Anschließend wird das Reaktionsgemisch unter Rühren bei 30°C durch Anlegen eines Vakuums entgast und die so erhaltene homogene Mischung in eine stehende Form (25 x 30 x 0,4 cm) gegossen. Die gefüllte Form wird anschließend im Trockenschrank bei 100°C während 16 Stunden getempert.

Bei der Polyetherpolyolmischung handelt es sich um ein Gemisch aus 162 g propoxylierten Glyzerins der OH-Zahl 250 und 74,5 g propoxylierten Trimethyolpropans der OH-Zahl 543. Die genanten Mengen der zum Einsatz gelangten Ausgangsmaterialien entsprachen einer NCO-Kennzahl von 104.

Es resultiert auf diese Weise eine steife, massive, opake Polyurethanplatte, die sich gegenüber einer anolog hergestellten Platte auf Basis des unmodifizierten Ausgangspolyisocyanatgemischs gemäß Beispiel 10 bei ansonsten unveränderten Reaktionsbedingungen durch eine deutlich verbesserte Schlagzähigkeit bei gleichguter Wärmebeständigkeit unterscheidet.

**Patentansprüche**

1. Modifizierte Polyisocyanate mit einem NCO-Gehalt von 10 bis 45 Gew.-%, bestehend im wesentlichen aus

   a) einer Polyisocyanatkomponente, bestehend im wesentlichen aus einem organischen, bei Raumtemperatur flüssigen Polyisocyanat mit einem NCO-Gehalt von 15 bis 50 Gew.-%,

   b) 2 bis 100 Gew.-%, bezogen auf das Gewicht der Komponente a), eines Polymermodifikators, bestehend aus mindestens einem in der Komponente a) aufgequollen dispergiert vorliegenden Pfropfkautschuk einer teilchenförmigen Struktur, welcher zu 20 bis 80 Gew.-% aus einem Kautschukpolymerisat einer unter 0°C liegenden Glasübergangstemperatur, und zum Rest aus aufgepfropften Vinylmonomeren besteht,

   sowie gegebenenfalls

   c) den üblichen Hilfs- und Zusatzstoffen der Polyurethanchemie.

2. Verfahren zur Herstellung von modifizierten Polyisocyanaten gemäß Anspruch 1, dadurch gekennzeichnet, daß man

   a) eine Polyisocyanatkomponente, bestehend aus mindestens einem organischen, bei Raumtemperatur flüssigen Polyisocyanat mit einem NCO-Gehalt von 15 bis 50 Gew.-%

   mit

   b) 2 bis 100 Gew.-%, bezogen auf das Gewicht der Komponente a), eines Polymermodifikators, bestehend aus mindestens einem in der Komponente a) aufgequollen dispergiert vorliegenden Pfropfkautschuk einer teilchenförmigen Struktur, welcher zu 20 bis 80 Gew.-% aus einem Kautschukpolymerisat einer unter 0°C liegenden Glasübergangstemperatur, und zum Rest aus aufgepfropften Vinylmonomeren besteht,

   vermischt und gegebenenfalls unter der Einwirkung von Scherkräften und erhöhten Temperaturen unter Aufquellen der Komponente b) diese in der Komponente a) dispergiert, wobei die gegebenenfalls ebenfalls eingesetzten Hilfs- und Zusatzstoffe c) den Ausgangskomponenten a) und/oder b) und/oder dem Gemisch während und/oder nach dem Dispergierschritt zugemischt werden.

3. Verwendung der modifizierten Polyisocyanate gemäß Anspruch 1 als Polyisocyanatkomponente bei der Herstellung von Kunststoffen nach dem Isocyanat-Polyadditionsverfahren.

4. Verwendung gemäß Anspruch 3 als Polyisocyanatkomponente bei der Herstellung von Polyurethankunststoffen.